# EUROPÄISCHE PATENTSCHRIFT

(11) **EP 1 799 340 B1**
(45) Veröffentlichungstag und Bekanntmachung des Hinweises auf die Patenterteilung: **20.02.2008**
(21) Anmeldenummer: 05798452.8
(22) Anmeldetag: 13.10.2005
(51) Int. Cl.: B01J 19/18, B01J 19/00, B01J 3/04

(54) **HYDROTHERMALSYNTHESE IN DRUCKBEHÄLTERN**
HYDROTHERMAL SYNTHESIS IN PRESSURISED CONTAINERS
SYNTHESE HYDROTHERMIQUE DANS DES RECIPIENTS SOUS PRESSION

(30) Priorität: 13.10.2004 DE 102004049914
(43) Veröffentlichungstag der Anmeldung: 27.06.2007
(73) Patentinhaber: SÜD-CHEMIE AG, 80333 München (DE)
(72) Erfinder: KURTH, Volker, 83043 Bad Aibling (DE); JAMBOR, Attila, 83209 Prien (DE); RAU, Richard, 83620 Kleinhöhenrain (DE); RINGELHAN, Christian, 83024 Rosenheim (DE)
(74) Vertreter: Westendorp, Michael Oliver
(86) Internationale Anmeldenummer: PCT/EP2005/011033
(87) Internationale Veröffentlichungsnummer: WO 2006/040162

(56) Entgegenhaltungen:
- EP-A- 0 517 365
- US-A- 4 374 093
- US-A- 4 555 384
- US-A- 6 149 880

## Beschreibung

Die Erfindung betrifft einen Reaktionsbehälter sowie ein Verfahren zur Herstellung eines Molekularsiebes.

Molekularsiebe werden meist in der Weise hergestellt, dass ein Synthesegel, welches in vorwiegend wässriger Lösung geeignete Ausgangsstoffe, bei der Synthese von Zeolithen beispielsweise eine Aluminiumquelle sowie eine Siliciumquelle, enthält, unter hydrothermalen Bedingungen über mehrere Tage erhitzt wird. Die Umsetzung wird meist in Gegenwart eines organischen Templats, wie beispielsweise einem quartären Ammoniumsalz, durchgeführt. Bei den während der Synthese angewendeten Temperaturen neigen einige dieser quartären Ammoniumverbindungen, wie z. B. Tetraethylammoniumhydroxid, jedoch zur Hofmann-Eliminierung, wobei bei der Zersetzung gasförmige Produkte entstehen, wie Amine oder niedermolekulare Kohlenwasserstoffe. Diese gasförmigen Nebenprodukte sammeln sich im Gasraum des Reaktionskessels an und führen dort zu einer nur schwer kontrollierbaren Druckerhöhung. Um zu verhindern, dass durch die Entwicklung gasförmiger Nebenprodukte der maximal zulässige Druck des Kessels überschritten wird, kann die Reaktion bei Bedingungen geführt werden, unter welchen die Hofmann-Eliminierung zurückgedrängt wird. Dazu kann beispielsweise die Reaktion bei tieferen Temperaturen durchgeführt werden oder die Basizität des Synthesegels verringert werden. Dies verlängert jedoch zum Einen die Synthesezeiten und zum Anderen wird die Phasenreinheit des entstehenden Molekularsiebs verringert. Beides ist unerwünscht.

In der WO 03/043937 A2 wird vorgeschlagen, die Herstellung von Zeolithen bei Temperaturen oberhalb von 125°C durchzuführen, wobei als Templat eine Mischung aus quartären Ammoniumhalogeniden und quartären Ammoniumhydroxiden verwendet wird. Das Verhältnis der Halogenide zum Hydroxid wird dabei so gewählt, dass infolge der verringerten Basizität des Synthesegels der Druck im Reaktionskessel zum Ende der Reaktion deutlich niedriger ist als bei Verwendung von reinen Ammoniumhydroxiden, ohne dass dazu die Reaktionstemperatur wesentlich verringert werden muss.

Eine weitere Möglichkeit, die Reaktion bei hohen Temperaturen durchführen zu können, besteht darin, die Druckfestigkeit des Reaktionskessels entsprechend zu erhöhen. Dies bewirkt jedoch eine deutliche Erhöhung der Investitionskosten.

Die unkontrollierte Erhöhung des Drucks im Reaktionskessel durch bei der Umsetzung entstehende gasförmige Nebenprodukte tritt auch bei anderen Synthesen auf. Auch hier müssen die Kessel entsprechend der zu erwartenden Druckspitzen dimensioniert werden bzw. die Reaktionsbedingungen entsprechend modifiziert werden, um mit einem gegebenen Reaktionskessel einer bestimmten Druckfestigkeit die Reaktion durchführen zu können.

Der Erfindung lag daher als erste Aufgabe zugrunde, einen Reaktionsbehälter bereit zu stellen, in welchem ohne Gefährdung Reaktionen durchgeführt werden können, bei welchem gasförmige Nebenprodukte entstehen, wobei die Investitionskosten für den Reaktionskessel gering gehalten werden sollen.

Diese Aufgabe wird mit einem Reaktionsbehälter mit den Merkmalen des Patentanspruchs 1 gelöst. Vorteilhafte Ausführungsformen sind Gegenstand der abhängigen Ansprüche.

Der erfindungsgemäße Reaktionsbehälter umfasst zwei unterschiedliche Kessel, welche miteinander in Verbindung stehen. Beide Kessel weisen eine bestimmte Druckfestigkeit auf, so dass eine Reaktion bei erhöhtem Druck durchgeführt werden kann. In einem im Allgemeinen größer dimensionierten Hauptkessel wird das Reaktionsgemisch vorgelegt. Dieser Hauptkessel entspricht in seinem Aufbau im Wesentlichen bekannten Druckkesseln für die Durchführung chemischer Reaktionen. Der Kessel ist aus einem geeigneten Material hergestellt, welches unter den Reaktionsbedingungen gegenüber den Komponenten des Reaktionsgemisches stabil ist. Ein geeignetes Material ist beispielsweise Edelstahl. Der Hauptkessel kann mit einer Heizvorrichtung versehen sein, beispielsweise einer Heizschlange oder einem Heizmantel, so dass der Innenraum des Hauptkessels mittels eines geeigneten Wärmeträgermediums, beispielsweise Dampf oder Öl, auf eine bestimmte Temperatur erhitzt werden kann. Der Kessel kann ferner über übliche verschließbare Öffnungen verfügen, durch welche die Komponenten des Reaktionsgemisches in den Innenraum des Hauptkessels eingefüllt werden können. Der Hauptkessel kann mit einem Rührwerk versehen sein sowie mit üblichen Zu- und Ableitungen, um den Kessel beispielsweise mit Flüssigkeiten zu befüllen oder mit einem Inertgas zu spülen.

Mit dem Hauptkessel ist ein Beruhigungskessel verbunden. Der Beruhigungskessel ist im Allgemeinen kleiner dimensioniert als der Hauptkessel. Der Beruhigungskessel weist ebenfalls eine bestimmte Druckfestigkeit auf, so dass im Haupt- sowie im Beruhigungskessel der gleiche Druck eingestellt werden kann. Der Beruhigungskessel wird ebenfalls aus einem Material gefertigt, dass unter den Reaktionsbedingungen gegenüber den Komponenten des Reaktionsgemisches inert ist, beispielsweise Edelstahl.

Der Beruhigungskessel weist ein Druckbegrenzungsventil auf, durch welches gasförmige Produkte aus dem Beruhigungskessel nach außen abgeführt werden können. Das Druckbegrenzungsventil öffnet sich bei einem bestimmten Druck, so dass gasförmige Produkte aus dem Reaktionsbehälter abgeführt werden können und der Druck im Reaktionsbehälter absinkt. Ist der Druck im Reaktionsbehälter auf einen bestimmten Wert abgefallen, schließt sich das Druckbegrenzungsventil wieder. Auf diese Weise kann eine Reaktion, bei welcher gasförmige Nebenprodukte entstehen, über einen längeren Zeitraum, beispielsweise mehrere Tage, in einem Reaktionsbehälter durchgeführt werden, welcher eine Druckfestigkeit aufweist, die wesentlich geringer ist, als die Druckfestigkeit eines Reaktionsbehälters, in welchem die gasförmigen Nebenprodukte während der Dauer der Reaktion verbleiben und dadurch zu einem wesentlich höheren Druck im Innenraum des Behälters beitragen. Der Reaktionsbehälter kann also für niedrigere Drücke ausgelegt werden, was die Investitionskosten wesentlich erniedrigt.

Im Hauptkessel wird die Reaktionsmischung beispielsweise unter Rühren zum Sieden erhitzt. Die in den Gasraum gelangten Komponenten können nun in den Beruhigungskessel übertreten. Im Beruhigungskessel findet eine deutlich geringere Verwirbelung der Gasphase statt, als dies im Hauptkessel der Fall ist. Dadurch können mitgerissene flüssige Anteile absinken und in den Hauptkessel zurückfließen. Die Gasphase kann dann über das Druckbegrenzungsventil abgelassen werden, bis der erwünschte Druck eingestellt ist. Die abgeführten Gase können, gegebenenfalls nach einer Abkühlungsphase, in die Atmosphäre entlassen werden, oder entsprechend den gesetzlichen Vorschriften aufgearbeitet werden.

Das Druckbegrenzungsventil ist vorzugsweise als Federventil ausgestaltet. Durch die Federkonstante bzw. die durch die Feder ausgeübte Gegenkraft kann der im Reaktionsbehälter maximal herrschende Druck eingestellt werden. Übersteigt der Druck im Reaktionskessel den vorbestimmten Wert, wird das Druckbegrenzungsventil gegen die Federkraft des Federventils geöffnet, so dass gasförmige Anteile aus dem Reaktionsbehälter entweichen können und der Druck absinkt. Wird ein bestimmter Druck erreicht, wird das Federventil durch die von der Feder ausgeübte Kraft wieder geschlossen. Federventile lassen sich vergleichsweise günstig herstellen. Dabei sind auch Ausführungen erhältlich, bei welchen die Federkraft verstellt werden kann, so dass der Reaktionsbehälter auch für unterschiedliche Reaktionen verwendet werden kann.

Neben dem Federventil können jedoch auch noch andere Arten von Druckbegrenzungsventilen verwendet werden. Beispielsweise kann auch ein magnetisch oder elektrisch schaltendes Ventil verwendet werden, welches über Drucksensoren gesteuert wird, die den Innendruck im Reaktionsbehälter messen. Geeignet sind an sich alle Ventile, die bei einem bestimmten, vorher eingestellten Druck öffnen, sodass der Druck im Reaktionskessel abnimmt, und die, nachdem der Druck auf einen vorher bestimmten Wert abgesunken ist, wieder schließen. Geeignet sind als Ventile, die reversibel öffnen und schließen.

Der Beruhigungskessel dient in erster Linie der Beruhigung der aus dem Hauptkessel aufsteigenden Brüden. Wie bereits erläutert, sollen im Beruhigungskessel nach Möglichkeit keine oder nur sehr geringe Verwirbelungen der Gasphase stattfinden, so dass flüssige bzw. kondensierte Anteile absinken und in den Hauptkessel zurückfließen. Der Beruhigungskessel kann daher ein Volumen aufweisen, dass deutlich geringer ist als das Volumen des Hauptkessels. Das Volumen des Beruhigungskessels beträgt vorzugsweise 0,5% bis 5% des Volumens des Hauptkessels. Die Dimensionierung von Haupt- und Beruhigungskessel hängt jedoch auch von der durchgeführten Reaktion ab und kann daher auch außerhalb des angegebenen Bereichs liegen. Aus wirtschaftlichen Gründen wird der Beruhigungskessel möglichst klein gewählt.

Hauptkessel und Beruhigungskessel sind über eine Leitung verbunden, wobei der Querschnitt der Leitung so gewählt ist, dass flüssige Anteile, wie Kondensat, ohne Rückstau aus dem Beruhigungskessel in den Hauptkessel zurückfließen können. Wird der Querschnitt der Leitung zu gering gewählt, reichert sich die flüssige Phase im Beruhigungskessel an, so dass in diesem keine wirkungsvolle Trennung von gasförmiger und flüssiger Phase mehr stattfinden kann, so dass auch flüssige Anteile über das Druckregelventil aus dem Reaktionsbehälter abgeführt werden. Der Querschnitt der Leitung hängt von der Dimensionierung des Hauptkessels bzw. des Beruhigungskessels sowie von den Reaktionsbedingungen ab. Die Dimensionierung des Querschnitts der Leitung kann vom Fachmann jedoch aufgrund der zu erwartenden Ströme leicht ermittelt werden.

Vorzugsweise beträgt der Querschnitt der Leitung weniger als 10% des Querschnitts des Beruhigungskessels, vorzugsweise weniger als 5%, insbesondere bevorzugt weniger als 3%.

Der Beruhigungskessel ist bevorzugt oberhalb des Hauptkessels angeordnet, wobei die Leitung zwischen Beruhigungskessel und Hauptkessel vorzugsweise im Wesentlichen senkrecht verläuft.

Der Beruhigungskessel wird vorzugsweise gekühlt, um dampfförmige Anteile der Reaktionsmischungen zu kondensieren. Die Kühlung kann dabei beispielsweise mit Wasser erfolgen. Bevorzugt erfolgt die Kühlung jedoch durch Luft. Diese kann an der Außenwand des Beruhigungskessels entlang streichen, um die Wärme abzuführen. Die unerwünschten gasförmigen Nebenprodukte haben oft einen deutlich niedrigeren Kondensationspunkt als die Reaktionspartner bzw. Produkte, so dass auch durch die einfache Luftkühlung eine effiziente Abtrennung der Nebenprodukte möglich ist.

Die Dimensionierung des Beruhigungskessels wird bevorzugt so gewählt, dass neben den unerwünschten gasförmigen Nebenprodukten nur geringe Anteile der Bestandteile der Reaktionsmischung aus dem Reaktionsbehälter abgeführt werden. Über die Größe des Beruhigungskessels kann daher die maximal abzuführende Wärme eingestellt werden. Bevorzugt liegt das Verhältnis von Höhe und Breite des Beruhigungskessels zwischen 3/1 und 1/5.

Der erfindungsgemäße Reaktionsbehälter eignet sich für die Durchführung von Reaktionen unter erhöhtem Druck. Er weist daher eine erhöhte Druckfestigkeit auf. Vorzugsweise weisen Haupt- und Beruhigungskessel eine Druckfestigkeit von mindestens 10 bar, vorzugsweise 10 bis 15 bar, auf. Die Schwankungsbreite des Druckregelventils wird vorzugsweise so eingestellt, dass sie weniger als 2 bar, vorzugsweise weniger als 1 bar, beträgt. Auf diese Weise lassen sich die Reaktionen bei annähernd isobaren Verhältnissen führen.

Wie bereits weiter oben erläutert, entstehen bei der Synthese von Molekularsieben, insbesondere Zeolithen, aus den in der Reaktionsmischung vorhandenen Templatverbindungen durch Zersetzung gasförmige Nebenprodukte, welche zu einem starken Druckanstieg im Reaktionsbehälter führen können. Der erfindungsgemäße Reaktionsbehälter eignet sich insbesondere für die Synthese von Zeolithen. Die Verwendung des erfindungsgemäßen Reaktionsbehälters ermöglicht es, die gasförmigen Nebenprodukte während der Durchführung der Reaktion aus dem Reaktionsbehälter abzuführen und damit einen starken Druckanstieg im Reaktionsbehälter zu vermeiden.

Gegenstand der Erfindung ist daher auch ein Verfahren zur Herstellung eines Molekularsiebs, wobei:
ein Synthesegel hergestellt wird, welches in vorwiegend wässriger Lösung enthält:
   a) Zumindest einen Ausgangsstoff, welcher ausgewählt ist aus der Gruppe, die gebildet ist aus einer Aluminiumquelle, einer Siliciumquelle, einer Titanquelle, einer Galliumquelle, einer Chromquelle, einer Borquelle, einer Eisenquelle, einer Germaniumquelle und einer Phosphorquelle;
   b) ein organisches Templat;
   c) gegebenenfalls eine Alkali- und/oder eine Erdalkaliionenquelle M mit einer Wertigkeit n;
das Synthesegel in einem Reaktionsbehälter, wie er oben beschrieben wurde, unter im Wesentlichen isobaren Bedingungen kristallisiert wird;
der Feststoff abgetrennt wird, und
der Feststoff gegebenenfalls gewaschen und getrocknet wird.

Als Aluminiumquelle können an sich alle üblichen und dem Fachmann geläufige Aluminiumquellen verwendet werden. Geeignet ist beispielsweise aktiviertes Aluminiumoxid, γ-Aluminiumoxid, Aluminiumhydroxid, Natriumaluminat, Aluminiumnitrat, oder auch Aluminiumsulfat. Sofern für die Synthese Alkaliionen eingebracht werden, ist Natriumaluminat besonders bevorzugt.

Als Siliciumquelle können ebenfalls übliche Siliciumquellen verwendet werden. Bevorzugt wird Fällungskieselsäure als Siliciumquelle verwendet.

Als Titanquelle, Galliumquelle, Chromquelle, Borquelle, Eisenquelle, Germaniumquelle und Phosphorquelle können ebenfalls alle üblichen und dem Fachmann geläufigen Ausgangsstoffe verwendet werden.

Eine geeignete Titanquelle ist beispielsweise Titanoxid, Tetraethylorthotitanat, Tetrapropylorthotitanat, Titanchlorid.

Eine geeignete Galliumquelle ist beispielsweise Galliumnitrat.

Eine geeignete Chromquelle ist beispielsweise Chromoxid, Chromnitrat, Chromchlorid, Chromacetylacetonat.

Eine geeignete Borquelle ist beispielsweise Borsäure.

Eine geeignete Eisenquelle ist beispielsweise Eisennitrat, Eisensulfat, Eisenacetylacetonat.

Eine geeignete Germaniumquelle ist beispielsweise Germaniumoxid, Germaniumchlorid.

Eine geeignete Phosphorquelle ist beispielsweise Phosphorsäure.

Die oben genannten Ausgangsstoffe können einzeln oder vorzugsweise im Gemisch von zumindest zwei Komponenten eingesetzt werden. Werden mehr als zwei Komponenten eingesetzt, wird eine der Komponenten meist in einem deutlich geringeren Anteil als die beiden anderen Komponenten zugefügt. Der Anteil der dritten bzw. weiteren Komponenten wird bevorzugt in einem Anteil von 0,1 bis 20 Gew.-%, bevorzugt 1 bis 10 Mol.-% gewählt, bezogen auf die Gesamtheit der als Ausgangsstoff eingesetzten Quellen.

Besonders bevorzugt werden mit dem erfindungsgemäßen Verfahren Zeolithe hergestellt. Diese werden ausgehend von einer Siliziumquelle und einer Aluminiumquelle hergestellt, wobei ggf. noch Anteile der anderen oben genannten Quellen beigefügt werden können.

Für die Ausbildung der gewünschten Struktur werden dem Synthesegel geeignete organische Template zugegeben. Geeignete Klassen von Templaten sind beispielsweise Amine, quartäre Ammoniumsalze, Alkohole, Ketone, Phosphoniumsalze.

Bei der Herstellung von beispielsweise Zeolithen werden als Template bevorzugt quartäre Ammoniumsalze verwendet, welche bei erhöhten Temperaturen zur Zersetzung in Nebenprodukte neigen, beispielsweise Tetraalkylammoniumhydroxide, wobei die Alkylgruppen bevorzugt zwei bis acht Kohlenstoffatome umfassen. Tetraethylammoniumhydroxid ist dabei besonders bevorzugt.

Als Alkali- und/oder Erdalkaliionenquelle können alle üblichen und dem Fachmann geläufigen Verbindungen eingesetzt werden, welche ein Alkali- oder Erdalkaliion M der Wertigkeit n enthalten. Die Wertigkeit n ist für Alkalimetalle 1 und für Erdalkalimetalle 2. Besonders bevorzugt wird als Alkalimetall Natrium eingesetzt. Als Alkalimetallquelle werden insbesondere Alkalihydroxide, vorzugsweise Natriumhydroxid, verwendet.

Bei der Synthese eines Molekularsiebs wird in der Weise vorgegangen, dass zunächst im Reaktionsbehälter eine Mischung, vorzugsweise eine Lösung der Ausgangsstoffe, des organischen Templats und ggf. der Alkali- und/oder Erdalkaliionenquelle hergestellt wird. Als Lösungsmittel wird Wasser verwendet, das auch kleinere Anteile an organischen Lösungsmitteln, wie beispielsweise Alkoholen, wie Methanol, Ethanol oder Isopropanol, Dimethylformamid oder Dimethylsulfoxid, enthalten kann, wobei der Anteil bevorzugt kleiner als 10 Gew.-%, besonders bevorzugt kleiner als 5 Gew.-%, insbesondere bevorzugt kleiner als 1 Gew.-% gewählt wird, jeweils bezogen auf das Gewicht des Lösungsmittels, also des Wassers und der ggf. enthaltenen organischen Lösungsmittel.

Die Reihenfolge, in welcher die einzelnen Komponenten des Synthesegels im Lösungsmittel gelöst werden, ist an sich keinen Beschränkungen unterworfen. Es kann zunächst das organische Templat im Wasser gelöst werden, und anschließend die weiteren Komponenten, oder auch eine Lösung der Ausgangsstoffe vorgelegt werden, in welcher dann das organische Templat gelöst wird. An sich kann dabei in der gleichen Weise vorgegangen werden, wie dies bereits für die Herstellung der betreffenden Molekularsiebe bekannt ist.

Das Synthesegel wird dann unter hydrothermalen Bedingungen erhitzt, wobei durch die Verwendung des oben beschriebenen Reaktionsbehälters der Druck im Reaktionsbehälter unterhalb eines zuvor bestimmten maximalen Drucks gehalten wird und gasförmige Nebenprodukte aus dem Reaktionsbehälter entweichen können. Die Reaktionszeit wird dabei in Abhängigkeit vom synthetisierten Molekularsieb gewählt werden und ist auch von der Menge des umgesetzten Synthesegels abhängig. Hier kann einerseits auf Erfahrungswerte zurückgegriffen werden, die bereits aus der Synthese in den bereits bekannten Reaktionsbehältern vorliegen. Andererseits kann der Fachmann durch Reihenversuche bzw. durch Probenentnahme während der Umsetzung die erforderliche Reaktionsdauer bestimmen.

Wie bereits erläutert, eignet sich das erfindungsgemäße Verfahren insbesondere für die Herstellung von Zeolithen.

Bei der Synthese eines Zeoliths wird bevorzugt in der Weise vorgegangen, dass zunächst eine Lösung von Tetraethylammoniumhydroxid bzw. einem anderen geeigneten Tetraalkylammoniumsalz in demineralisiertem Wasser bereitgestellt wird. Zu dieser Lösung wird anschließend die Aluminiumquelle, beispielsweise Natriumaluminat, sowie ggf. eine Quelle für Alkali- und/oder Erdalkalimetallionen M mit der Wertigkeit n, beispielsweise Natriumhydroxid, zugegeben, und die Mischung solange gerührt, bis eine Lösung der Bestandteile erhalten wird. Zu dieser Lösung wird anschließend die Siliciumquelle, beispielsweise Fällungskieselsäure, portionsweise zugegeben, wobei ein hochviskoses Gel erhalten wird. Die Synthese des Zeoliths wird bevorzugt in einer geringen Wassermenge als Lösungsmittel durchgeführt. Dazu wird das molare Verhältnis H₂O : SiO₂ bevorzugt im Bereich von 5 bis 15 eingestellt. Der Reaktionsbehälter wird dann verschlossen und das Druckregelventil des Beruhigungskessels auf einen bestimmten Wert eingestellt. Der Hauptkessel wird erwärmt, so dass der Druck im Kesselinneren ansteigt. Das Druckregelventil wird dabei bevorzugt so eingestellt, dass die Reaktion bei der gegebenen Temperatur unter hydrothermalen Bedingungen verläuft und lediglich der Druckanstieg durch Entwicklung gasförmiger Nebenprodukte zu einer Öffnung des Druckregelventils führt. Das Druckregelventil wird dabei bevorzugt in der Weise eingestellt, dass die Umsetzung bei einem Druck von mehr als 8 bar, vorzugsweise bei einem Druck im Bereich von 10 bis 13 bar, durchgeführt wird. Dazu wird die Temperatur im Hauptkessel zur Kristallisation des Synthesegels vorzugsweise auf Temperaturen im Bereich von 120°C bis 200°C, insbesondere 140°C bis 180°C, eingestellt. Besonders geeignet wird die Kristallisation bei einer Temperatur von etwa 160°C durchgeführt. Die Kristallisationszeit beträgt vorzugsweise etwa 50 bis 500 Stunden, insbesondere etwa 100 bis 250 Stunden. Die Kristallisationszeit wird beispielsweise durch die Kristallisationstemperatur beeinflusst. Unter diesen Synthesebedingungen wird ein Feststoff erhalten, welcher in seiner Reinheit, Kristallinität und Kristallgröße einem Feststoff entspricht, wie er bei Verwendung eines identischen Synthesegels bei höherem Synthesedruck ohne Verwendung des erfindungsgemäßen Reaktionsbehälters erhalten wird. Vorzugsweise weist der Feststoff Primärkristallite mit einer mittleren Primärkristallitgröße von nicht mehr als etwa 0,1 µm auf.

Das kristallisierte Produkt wird anschließend von der Mutterlauge abgetrennt. Dazu kann der Reaktionsansatz beispielsweise mit Hilfe einer Membranfilterpresse filtriert werden. Andere Verfahren zur Abtrennung des Feststoffs können jedoch ebenfalls durchgeführt werden. Eine Abtrennung kann beispielsweise auch durch Zentrifugation erfolgen. Der abgetrennte Feststoff wird anschließend mit demineralisiertem Wasser gewaschen. Bevorzugt wird der Waschvorgang solange durchgeführt, bis die elektrische Leitfähigkeit des Waschwassers unter 100 µs/cm abgesunken ist.

Der abgetrennte Niederschlag kann anschließend getrocknet werden. Die Trocknung wird beispielsweise an Luft in üblichen Trockenvorrichtungen durchgeführt. Die Trockentemperatur wird beispielsweise im Bereich von 100°C bis 120°C gewählt. Die Trockenzeit liegt im Allgemeinen im Bereich von etwa 10 bis 20 Stunden. Die Trockenzeit ist dabei abhängig von der Feuchtigkeit des abgetrennten Feststoffs sowie der Größe der Charge. Der getrocknete Feststoff kann anschließend in üblicher Weise zerkleinert, insbesondere granuliert oder gemahlen werden.

Zur Entfernung des Templats kann der Feststoff calciniert werden. Die Calcinierung wird unter Luftzutritt durchgeführt, wobei Temperaturen im Bereich von 400 bis 700°C, vorzugsweise 500 bis 600°C, gewählt werden. Die Dauer für die Calcinierung wird im Allgemeinen zwischen 3 und 12 Stunden, vorzugsweise 3 und 6 Stunden, gewählt. Die Zeiten für die Calcinierung beziehen sich dabei auf die Dauer, für welche der Zeolith bei der maximalen Temperatur gehalten wird. Aufheiz- und Abkühlzeiten sind nicht berücksichtigt. Der Gehalt des Katalysators an austauschbaren Kationen, insbesondere Alkaliionen, kann beispielsweise durch Behandlung mit geeigneten Kationenquellen, wie Ammoniumionen, Metallionen, Oxoniumionen bzw. deren Mischungen beeinflusst werden, wobei die im Zeolith enthaltenen austauschbaren Ionen, insbesondere Alkaliionen, ausgetauscht werden. Der mit den entsprechenden Ionen beladene Katalysator kann anschließend erneut gewaschen und getrocknet werden. Die Trocknung wird beispielsweise bei Temperaturen von 110 bis 130°C für eine Dauer von 12 bis 16 Stunden durchgeführt. Um bei einem Austausch gegen Ammoniumionen den Katalysator in eine saure aktivierte Form zu überführen, kann der Katalysator noch calciniert werden, wobei beispielsweise Temperaturen im Bereich von 460 bis 500°C für eine Dauer von 6 bis 10 Stunden angewendet werden können. Abschließend kann der Katalysator noch vermahlen werden.

Die Reaktionsbedingungen wurden beispielhaft für die Herstellung eines Zeoliths erläutert. Für die Herstellung anderer Molekularsiebe können an sich die gleichen Reaktionsbedingungen verwendet werden. So lassen sich bei analogen Bedingungen beispielsweise Aluminiumphosphate herstellen.

Das erhaltene Molekularsieb bzw. bevorzugt der erhaltene Zeolith kann in Pulverform verwendet werden. Zur Erhöhung der mechanischen Stabilität und zur besseren Handhabung kann das Molekularsieb bzw. der Zeolith jedoch auch zu Formkörpern verarbeitet werden. Dazu kann das Molekularsieb bzw. der Zeolith, beispielsweise mit oder ohne Zusatz von Bindemitteln, zu entsprechenden Formkörpern gepresst werden. Die Formgebung kann jedoch auch nach anderen Verfahren erfolgen, beispielsweise durch Extrudieren. Dabei wird das erhaltene Pulver nach Zusatz eines Bindemittels, beispielsweise Pseudoboehmit, zu Formkörpern geformt. Die Formkörper können anschließend getrocknet werden, beispielsweise bei Temperaturen von 100 bis 130°C. Gegebenenfalls können die Formkörper noch calciniert werden, wobei im Allgemeinen Temperaturen im Bereich von 400 bis 600°C verwendet werden.

Das erfindungsgemäße Verfahren eignet sich insbesondere für die Herstellung von ZSM-12 Zeolithen. In diesem Fall wird ein Tetraethylammoniumsalz, vorzugsweise das Hydroxid, als Templat verwendet. Insbesondere eignet sich das erfindungsgemäße Verfahren für die Herstellung eines ZSM-12 Zeoliths, wie er in der DE 103 14 753 beschrieben ist.

Die Synthese des Zeoliths wird dabei bevorzugt direkt mit dem gewünschten SiO₂/Al₂O₃-Verhältnis durchgeführt, indem die Menge an Siliciumquelle und Aluminiumquelle in der Synthesegelzusammensetzung entsprechend eingestellt wird. Das SiO₂/Al₂O₃-Verhältnis in der Synthesegelzusammensetzung stimmt in etwa mit dem SiO₂/Al₂O₃-Verhältnis im ZSM-12 Zeolith überein. Der SiO₂-Anteil in der Synthesegelzusammensetzung weicht, wie dem Fachmann geläufig, im Allgemeinen um etwa ± 10% vom Anteil im fertigen Zeolith ab. Nur bei sehr großen bzw. sehr geringen Anteilen von SiO₂ werden größere Abweichungen beobachtet. Dadurch ist keine anschließende Dealuminierung des Zeoliths zur Einstellung des SiO₂/Al₂O₃-Verhältnisses erforderlich. Der Aluminiumgehalt des Zeoliths vom ZSM-12 Typ muss somit nicht nachträglich durch Zugabe von Säure und Herauslösen von Aluminiumatomen erniedrigt werden. Es wird angenommen, dass durch die direkte Synthese ein homogener Aufbau des Zeoliths ermöglicht und sogenanntes "extra-framework"-Aluminium vermieden wird, das beim nachträglichen Dealuminieren nach der Zeolithsynthese entsteht und die Aktivität bzw. Selektivität des ZSM-12 Zeoliths nachteilig beeinflussen kann.

Das im Synthesegel eingestellte molare Verhältnis TEA⁺/SiO₂ wird vorzugsweise gering gewählt. Bevorzugt wird das molare Verhältnis TEA⁺/SiO₂ zwischen etwa 0,10 und 0,18 gewählt. In der Synthesegelzusammensetzung wird das molare Verhältnis SiO₂/Al₂O₃ bevorzugt im Bereich von etwa 50 bis etwa 150 eingestellt.

Das Synthesegel sollte vorzugsweise auch einen verhältnismäßig geringen Alkali- und/oder Erdalkaligehalt aufweisen, wobei das molare Verhältnis M_{2/n}O : SiO₂ vorteilhafterweise zwischen etwa 0,01 und 0,045 liegen kann. Dabei ist M₂/ₙO das Oxid des Alkali- bzw. Erdalkalimetalls mit der Wertigkeit n. Des weiteren wird vorteilhaft ein verhältnismäßig niedriges molares Verhältnis von H₂O: SiO₂ von etwa 5 bis 18, vorzugsweise 5 bis 13, im Synthesegel verwendet. Als Metallion M wird vorzugsweise ein Alkalimetall gewählt, insbesondere bevorzugt Natrium.

Die Siliciumquelle hat einen erheblichen Einfluss auf die Morphologie und katalytische Aktivität des hergestellten ZSM-12 Zeoliths. Bevorzugt wird eine Fällungskieselsäure verwendet, welche im Vergleich zu kolloidaler Kieselsäure eine niedrigere Reaktivität aufweist. Dadurch kann auch die mittlere Größe der erhaltenen Primärkristallite, welche vorzugsweise bei weniger als 0,1 µm liegen soll, mit beeinflusst werden. Die Fällungskieselsäure weist vorzugsweise eine BET-Oberfläche von ≤ 200 m²/g auf.

Die mittlere Größe der Primärkristallite im hergestellten ZSM-12 Zeolith ist verhältnismäßig gering und beträgt weniger als 0,1 µm. Die Primärkristallitgröße kann aus rasterelektronischen Aufnahmen ermittelt werden, indem eine Anzahl von Primärkristalliten im Hinblick auf Länge und Breite vermessen wird. Über die gemessenen Primärkristallitgrößen wird dann der arithmetische Mittelwert gebildet. Die erhaltenen Primärkristallite weisen in der Regel keine wesentlichen Unterschiede in ihrer Ausdehnung in der Breite im Vergleich zur Ausdehnung in der Länge auf. Sollte dies im Einzelfall vorkommen, wird bei der Bestimmung der Primärkristallitgröße der größte und der kleinste Durchmesser des Kristallits ermittelt.

Im Einzelnen wird so vorgegangen, dass rasterelektronenmikroskopische Aufnahmen des gewaschenen und getrockneten, aber uncalcinierten, templathaltigen ZSM-12 Zeoliths bei einer Vergrößerung von 68.000 bis 97.676 angefertigt werden (Gerät: Leo 1530; Leo GmbH, Oberkochen, DE). Auf den Aufnahmen werden 30 Primärkristallite ausgewählt, welche klar abgegrenzt sind und deren Ausdehnung in der Länge bzw. der Breite ausgemessen und daraus der Mittelwert bestimmt. Aus den so bestimmten Durchmessern wird dann der arithmetische Mittelwert, d.h. die mittlere Primärkristallitgröße, gebildet. Die Primärkristallitgröße wird durch Calcinieren im Wesentlichen nicht beeinflusst. Die Primärkristallitgröße kann daher direkt nach der Synthese des Zeoliths vom ZSM-12 Typ sowie auch nach dem Calcinieren bestimmt werden.

Bevorzugt weisen die Primärkristallite eine Größe im Bereich von etwa 10 bis 80 nm, besonders bevorzugt im Bereich von etwa 20 bis 60 nm auf. Der Katalysator umfasst also vergleichsweise kleine Primärkristallite.

Nach einer besonders bevorzugten Ausführungsform sind die Primärkristallite des Zeoliths zumindest teilweise zu Agglomeraten zusammengelagert. Vorteilhafterweise sind die Primärkristallite zu einem Anteil von mindestens 30%, vorzugsweise mindestens 60%, insbesondere mindestens 90%, zu Agglomeraten zusammengelagert. Die Prozentangeben beziehen sich dabei auf die Gesamtzahl der Primärkristallite.

Bei Einhaltung der vorstehend beschriebenen Bedingungen bei der Synthese des Zeoliths vom ZSM-12 Typ wird eine besonders vorteilhafte Morphologie der Agglomerate aus den sehr kleinen Primärkristalliten erhalten, die auch die katalytische Aktivität des ZSM-12 Zeoliths positiv beeinflusst. Die Agglomerate weisen an ihrer Oberfläche eine große Anzahl von Hohlräumen bzw. Zwischenräumen zwischen den einzelnen Primärkristalliten auf. Die Agglomerate bilden somit einen lockeren Verbund aus Primärkristalliten mit von der Agglomeratoberfläche zugänglichen Hohlräumen oder Zwischenräumen zwischen den Primärkristalliten. Auf rasterelektronischen Aufnahmen erscheinen die Agglomerate als schwammartige Strukturen mit stark zerklüfteter Oberfläche, die durch den lockeren Zusammenhalt der Primärkristallite erzeugt wird. Die Aufnahmen zeigen vorzugsweise größere sphärische Agglomerate, die eine brokkoliartige Form aufweisen. Die strukturierte Oberfläche ist aus Primärkristalliten gebildet, die einen lockeren Verbund ausbilden. Zwischen einzelnen Kristalliten sind Hohlräume ausgebildet, von welchen zur Oberfläche hin Kanäle führen, die auf den Aufnahme als dunkel abgesetzte Stellen der Oberfläche erscheinen. Insgesamt wird eine poröse Struktur erhalten. Die aus den Primärkristalliten gebildeten Agglomerate sind vorzugsweise wiederum zu größeren übergeordneten Agglomeraten verbunden, zwischen denen einzelne Kanäle mit größerem Durchmesser ausgebildet sind.

Zur Verwendung als Katalysator, insbesondere beim Einsatz für Hydrierungen, Dehydrierungen und Hydroisomerisierungen, wird der Katalysator noch mit geeigneten aktivierenden Verbindungen (aktiven Komponenten) belegt. Die Zugabe der aktiven Komponenten kann dabei auf jede dem Fachmann geläufige Art erfolgen, z.B. durch intensives Vermischen, Verdampfen, Tränken bzw. Imprägnieren mit einer Lösung oder Einlagerung in den Zeolith. Bevorzugt erfolgt eine Belegung des erhaltenen Zeoliths mit zumindest einem Nebengruppenmetall, insbesondere besonders bevorzugt mindestens einem Edelmetall. Dazu wird der Zeolith beispielsweise mit einer entsprechenden Lösung des Nebengruppenmetalls bzw. eines Edelmetalls getränkt. Für die Beladung mit Platin eignet sich beispielsweise eine wässrige H₂PtCl₆-Lösung. Die Tränklösung wird dabei vorzugsweise so eingestellt, dass die Tränklösung vollständig vom Katalysator aufgenommen wird. Die Katalysatoren werden anschließend beispielsweise bei Temperaturen von etwa 110 bis etwa 130°C für 12 bis 20 Stunden getrocknet und beispielsweise bei 400 bis 500°C für 3 bis 7 Stunden calciniert.

Die auf diese Weise hergestellten Katalysatoren eignen sich insbesondere für eine Modifikation von Kohlenwasserstoffen. Sie eignen sich beispielsweise zum Reformieren von Schnitten der Erdöldestillation, zum Erhöhen der Fließfähigkeit von Gasölen, zur Isomerisierung von Olefinen oder aromatischen Verbindungen, zum katalytischen oder hydrierenden Cracken wie auch zur Oligomerisation oder Polymerisation von olefinischen oder acetylenischen Kohlenwasserstoffen. Weitere Anwendungen sind Alkylierungsreaktionen, Transalkylierung, Isomerisierung oder Disproportionierung von Aromaten und alkylsubstituierten Aromaten, Dehydrierung und Hydrierung, Hydratisierung und Dehydratisierung, Alkylierung und Isomerisierung von Olefinen, Desulfonierung, Umsatz von Alkoholen und Ethern zu Kohlenwasserstoffen und Umsatz von Paraffinen oder Olefinen zu Aromaten.

Die Erfindung wird im Weiteren anhand von Beispielen sowie unter Bezugnahme auf eine beigefügte Figur näher erläutert. Dabei zeigt:

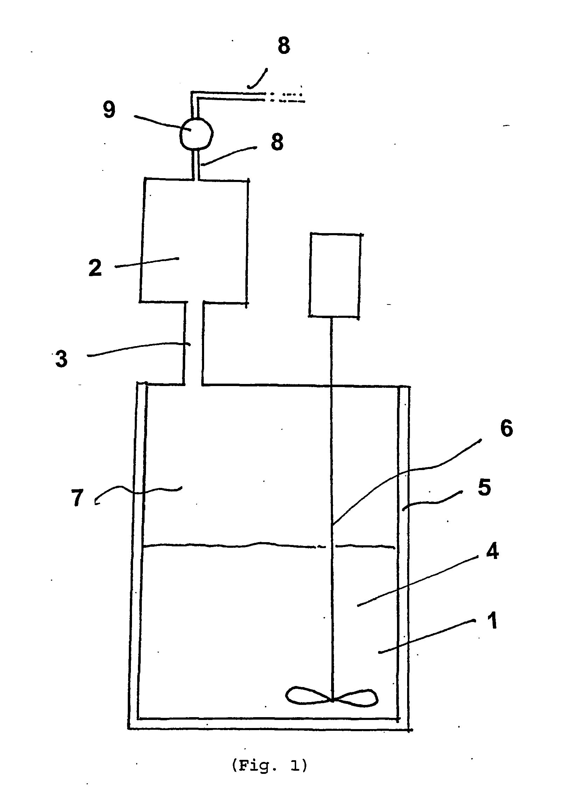

Fig. 1 eine schematische Darstellung eines Schnitts durch einen erfindungsgemäßen Reaktionsbehälter.

In Figur 1 ist in stark schematisierter Darstellung ein Längsschnitt durch einen erfindungsgemäßen Reaktionsbehälter dargestellt. Der Reaktionsbehälter umfasst zwei verschiedene Kessel, einen Hauptkessel 1 sowie einen Beruhigungskessel 2. Hauptkessel 1 und Beruhigungskessel 2 sind über eine Leitung 3 verbunden. Der Hauptkessel 1 weist ein wesentlich größeres Volumen auf als der Beruhigungskessel 2. Der Querschnitt der Leitung 3 ist wiederum erheblich geringer gewählt als der Querschnitt des Beruhigungskessels 2. In dem Hauptkessel 1 wird das Reaktionsgemisch 4 eingefüllt und der Hauptkessel mittels eines Wärmemantels 5 erwärmt, bis die gewünschte Reaktionstemperatur im Reaktionsgemisch 4, beispielsweise 165°C, erreicht ist. Das Reaktionsgemisch 4 lässt sich mittels eines Rührers 6 bewegen. Das Reaktionsgemisch 4 umfasst beispielsweise ein Synthesegel zur Molekularsiebsynthese, insbesondere zur Zeolithsynthese, welches aus einer vorwiegend wässrigen Suspension hergestellt wurde, welche beispielsweise eine Aluminiumquelle, eine Siliciumquelle, organisches Templat, beispielsweise ein Tetraalkylammoniumsalz als Templat, sowie gegebenenfalls Alkali- und/oder Erdalkaliquellen enthält. Durch die Erwärmung des Reaktionsgemisches steigt der Druck im Hauptkessel 1 und damit auch in der Leitung 3 und dem Beruhigungskessel 2 an. Ferner treten Komponenten des Reaktionsgemisches 4 in die über dem Reaktionsgemisch 4 angeordnete Gasphase 7 über, beispielsweise Wasserdampf. Während der Synthese des Molekularsiebs zersetzt sich ein Teil des organischen Templats, beispielsweise des eingesetzten Tetraalkylammoniumsalzes, unter Eliminierung gasförmiger Nebenprodukte. Diese treten ebenfalls in die Gasphase 7 über und resultieren in einem zusätzlichen Druckanstieg im Reaktionsbehälter. Die in der Gasphase angeordneten Komponenten gelangen über die Leitung 3 in den Beruhigungskessel 2. Über die Außenwände des Beruhigungskessels 2 kann Wärme abgeführt werden, so dass verdampfte Bestandteile des Reaktionsgemisches 4, beispielsweise Wasserdampf, wieder kondensieren und über Leitung 3 wieder zurück in den Hauptkessel 1 fließen. Der Querschnitt der Leitung 3 ist dabei so gewählt, dass die im Beruhigungskessel 2 kondensierte flüssige Phase wieder in den Hauptkessel 2 zurücklaufen kann, ohne durch aufsteigende Gase, die aus dem Hauptkessel 1 in den Beruhigungskessel 2 strömen, zurückgedrängt zu werden. Im Beruhigungskessel 2 sammeln sich durch die Kondensation der Komponenten des Reaktionsgemisches 4 die gasförmigen Nebenprodukte, welche aus dem Tetraalkylammoniumsalz entstanden sind, an. Vom Beruhigungskessel 2 führt eine Ableitung 8 zu einem Druckregelventil 9. Das Druckregelventil 9 ist auf einen bestimmten Gegendruck eingestellt.

Steigt der Druck im Reaktionsbehälter durch die Entwicklung gasförmiger Nebenprodukte an, übersteigt dieser den vom Druckregelventil ausgeübten Gegendruck, so dass dieses geöffnet wird. Die gasförmigen Nebenprodukte können dann über die Ableitung 8 abgeführt und einer Aufarbeitung zu geführt werden. Durch das Abströmen der gasförmigen Nebenprodukte sinkt der Druck im Reaktionsbehälter, so dass der Druck unter den im Druckregelventil 9 eingestellten Druck absinkt. Dadurch verschließt sich das Druckregelventil 9 wieder. Auf diese Weise kann der im Reaktionsbehälter, d.h. im aus dem Hauptkessel 1, der Leitung 3 und dem Beruhigungskessel 2 gebildeten Reaktionssystem, herrschende Druck annähernd konstant gehalten werden. Die Druckfestigkeit des Hauptkessels 1, des Beruhigungskessels 2 sowie der Leitung 3 kann daher entsprechend ausgelegt werden.

### Beispiel: Synthese von ZSM-12

Für die Herstellung des ZSM-12 Zeoliths wurde eine Synthesegelzusammensetzung hergestellt, welche die folgende Zusammensetzung aufwies:
8,5952 H₂O : SiO₂ : 0,0099 Al₂O₃ : 0,0201 Na₂O : 0,1500 TEAOH.
TEAOH = Tetraethylammoniumhydroxid.

271,2 g Natriumaluminat und 99,1 g NaOH wurden unter Rühren in 9.498,3 g einer wässrigen Lösung von Tetraethylammoniumhydroxid (35 Gew.-%) und 15.905,3 g Wasser gelöst. Die Lösung wurde in einem 40 Liter fassenden Druckbehälter vorgelegt, welcher mit einem Rührer versehen war. Mit dem Druckbehälter war über eine Leitung, welche einen Innendurchmesser von 5 mm aufwies, ein Beruhigungskessel verbinden, der ein Volumen von 300 ml aufwies. Der Beruhigungsraum war mit einem verstellbaren Federventil ausgerüstet, über welches Gas aus dem Beruhigungskessel in die Umgebung abgeführt werden konnte. Unter starkem Rühren wurden 10.227,1 g Fällungskieselsäure mit einer spezifischen Oberfläche von 170 m²/g in kleinen Portionen zugegeben. Es wurde ein hochviskoses Gel erhalten, dass bei 24,0°C einen pH-Wert von 13,7 aufwies. Der Druckbehälter wurde geschlossen und der Inhalt während 12 Stunden auf 163°C erhitzt und dann für eine Gesamtreaktionszeit von 155 Stunden bei dieser Temperatur gehalten. Das Druckregelventil war dabei auf einen Gegendruck von 12 bar eingestellt. Während der Reaktionszeit öffnete sich das Druckregelventil in Abständen, so dass Gasphase aus dem Reaktionssystem abgeführt wurde.

Nach Ablauf von 155 Stunden wurde der Druckbehälter auf Raumtemperatur abgekühlt. Das feste Produkt wurde durch Filtration von der Mutterlauge abgetrennt und anschließend solange mit demineralisiertem Wasser gewaschen, bis die Leitfähigkeit des Waschwassers unterhalb von 100 µs/cm lag. Der Filterkuchen wurde bei 120°C unter Luftzutritt während 16 Stunden getrocknet und anschließend unter Luftzutritt calciniert. Zum Calcinieren wurde der getrocknete Feststoff zunächst bei einer Aufheizrate von 1 K/min auf 120°C erhitzt und 3 Stunden bei dieser Temperatur gehalten. Anschließend wurde mit einer Steigerungsrate von 1 K/min auf 550°C erhitzt und diese Temperatur für 5 Stunden gehalten.

Die Untersuchung mit Röntgenbeugung ergab, dass sich ZSM-12 gebildet hatte. Die rasterelektronenmikroskopische Untersuchung zeigt Agglomerate mit einem Durchmesser von ungefähr 0,8 µm, welche aus kleinen Primärkristalliten gebildet sind, wobei die - Agglomerate eine brokkoliartige Struktur zeigen.

### Bezugszeichenliste

1. Hauptkessel
2. Beruhigungskessel
3. Leitung
4. Reaktionsgemisch
5. Wärmemantel
6. Rührer
7. Gasphase
8. Ableitung
9. Druckregelventil

## Patentansprüche

1. Verfahren zur Herstellung eines Molekularsiebs, wobei:
- ein Synthesegel hergestellt wird, welches in vorwiegendwässriger Lösung enthält:
a) Zumindest einen Ausgangsstoff, welcher ausgewählt ist aus der Gruppe, welche gebildet ist durch eine Aluminiumquelle, eine Siliziumquelle, eine Titanquelle, eine Galliumquelle, eine Chromquelle, eine Borquelle, eine Eisenquelle, eine Germaniumquelle, und eine Phosphorquelle;
b) ein organisches Templat;
c) gegebenenfalls eine Alkali- und/oder eine Erdalkalimetallionenquelle M mit der Wertigkeit n;
- das Synthesegel in einem Reaktionsbehälter unter im Wesentlichen isobaren Bedingungen kristallisiert wird;
- der Feststoff abgetrennt wird; und
- der Feststoff gegebenenfalls gewaschen und getrocknet wird;
**dadurch gekennzeichnet, dass** der Reaktionsbehälter zumindest umfasst:
- einen druckfesten Hauptkessel (1);
- einen mit dem Hauptkessel (1) verbundenen Beruhigungskessel (2), welcher oberhalb des Hauptkessels (1) angeordnet ist, wobei Hauptkessel (1) und Beruhigungskessel (2) über eine im Wesentlichen senkrecht verlaufende Leitung (3) verbunden sind, deren Querschnitt so gewählt ist, dass Kondensat ohne Rückstau aus dem Beruhigungskessel (2) in den Hauptkessel (1) zurückfließen kann;
wobei der Beruhigungskessel (2) ein Druckbegrenzungsventil (9) aufweist, durch welches gasförmige Produkte aus dem Beruhigungskessel (2) nach außen abgeführt werden können.

2. Verfahren nach Anspruch 1, wobei das Druckbegrenzungsventil (9) als Federventil ausgestaltet ist.

3. Verfahren nach Anspruch 1 oder 2, wobei der Beruhigungskessel (2) ein Volumen aufweist, welches 0,5% bis 5% des Volumens des Hauptkessels (1) entspricht.

4. Verfahren nach einem der vorhergehenden Ansprüche, wobei der Querschnitt der Leitung (3) weniger als 10% des Querschnitts des Beruhigungskessels (2) beträgt.

5. Verfahren nach einem der vorhergehenden Ansprüche, wobei der Beruhigungskessel (2) eine Luftkühlung aufweist.

6. Verfahren nach einem der vorhergehenden Ansprüche, wobei das Verhältnis der Höhe zur Breite des Beruhigungskessels (2) zwischen 3/1 und 1/5 gewählt ist.

7. Verfahren nach einem der vorhergehenden Ansprüche, wobei Haupt- (1) und Beruhigungskessel (2) eine Druckfestigkeit von mindestens 10 bar aufweisen.

8. Verfahren nach einem der vorhergehenden Ansprüche, wobei das Druckregelventil (9) eine Schwankungsbreite von weniger als 2 bar aufweist.

9. Verfahren nach einem der vorhergehenden Ansprüche, wobei während der Umsetzung gasförmige Nebenprodukte aus dem Reaktionskessel entfernt werden.

10. Verfahren nach einem der vorhergehenden Ansprüche, wobei die Umsetzung bei einem Druck von mehr als 8 bar, vorzugsweise bei einem Druck im Bereich von 10 bis 13 bar, durchgeführt wird.

11. Verfahren nach einem der vorhergehenden, wobei zur Einstellung des Drucks der Reaktionsbehälter erhitzt wird.

12. Verfahren nach einem der vorhergehenden Ansprüche, wobei das Molekularsieb ein Zeolith ist und das Synthesegel als Ausgangsstoff zumindest eine Aluminiumquelle sowie eine Siliziumquelle enthält, wobei das molare Verhältnis H₂O . SiO₂ bevorzugt im Bereich von 5 bis 15 eingestellt wird.

13. Verfahren nach einem der vorhergehenden Ansprüche, wobei das organische Templat ein quartäres Ammoniumsalz ist.

14. Verfahren nach einem der vorhergehenden Ansprüche, wobei in der Synthesegelzusammensetzung das molare Verhältnis M_{2/n}O: SiO₂ im Bereich von 0,01 bis 0,045 eingestellt wird, wobei M für ein Alkali- oder Erdalkalimetall der Wertigkeit n steht.

15. Verfahren nach einem der vorhergehenden Ansprüche, wobei das molare Verhältnis SiO₂/Al₂O₃ im Bereich von 50 bis 150 eingestellt wird.

16. Verfahren nach einem der vorhergehenden Ansprüche, wobei die Kristallisation des Synthesegels bei Temperaturen von 120°C bis 200°C, insbesondere 140°C bis 180°C, durchgeführt wird.

17. Verfahren nach einem der vorhergehenden Ansprüche, wobei die Kristallisationszeit etwa 50 bis 500 Stunden, insbesondere etwa 100 bis 250 Stunden, beträgt.

18. Verfahren nach einem der vorhergehenden Ansprüche, wobei das quartäre Ammoniumsalz ein Tetraethylammoniumsalz ist.

## Claims

1. A method of producing a molecular sieve, wherein:
- a synthetic gel is prepared which in predominant solution contains:
a) at least one starting material which is chosen from the group formed by an aluminium source, a silicon source, a titanium source, a gallium source, a chromium source, a boron source, an iron source, a germanium source and a phosphorus source;
b) an organic template;
c) optionally, an alkali and/or alkaline earth metallic ion source M of the valency n;
- the synthetic gel is crystallised in a reaction vessel under essentially isobar conditions;
- the solid matter is separated, and
- the solid matter is optionally washed and dried;
**characterised in that** the reaction vessel comprises at least:
- one pressure-resistant main boiler (1);
- one settling boiler (2) which is connected to the main boiler (1) and which is disposed above the main boiler (1), wherein the main boiler (1) and settling boiler (2) are connected via a duct (3) which extends substantially vertically and the cross-section of which is chosen so that condensate can flow back into the main boiler (1) from the settling boiler (2) without backflow ;
wherein the settling boiler (2) has a pressure-relief valve (9) through which gaseous products can be discharged to the exterior from the settling boiler (2).

2. A method according to Claim 1, wherein the pressure-relief valve (9) is in the form of a spring-seated valve.

3. A method according to preceding Claim 1 or 2, wherein the settling boiler (2) has a volume which corresponds to 0.5 % to 5 % of the volume of the main boiler (1).

4. A method according to any one of the preceding Claims, wherein the cross-section of the duct (3) amounts to less than 10 % of the cross-section of the settling boiler (2).

5. A method according to any one of the preceding Claims, wherein the settling boiler (2) has air cooling.

6. A method according to any one of the preceding Claims, wherein the ratio of the height to width of the settling boiler (2) is chosen at between 3/1 and 1/5.

7. A method according to any one of the preceding Claims, wherein the main boiler (1) and settling boiler (2) have a pressure resistance of at least 10 bar.

8. A method according to any one of the preceding Claims, wherein the pressure-relief valve (9) has a fluctuation range of less than 2 bar.

9. A method according to any one of the preceding Claims, wherein during the conversion gaseous by-products are removed from the reaction vessel.

10. A method according to any one of the preceding Claims, wherein the conversion is carried out at a pressure of more than 8 bar, preferably at a pressure in the range of from 10 to 13 bar.

11. A method according to any one of the preceding Claims [sic], wherein the reaction vessel is heated to adjust the pressure.

12. A method according to any one of the preceding Claims, wherein the molecular sieve is a zeolite and the synthetic gel contains as starting material at least one aluminium source and also a silicon source, wherein the molar ratio H₂O SiO₂ is preferably adjusted in the range of from 5 to 15.

13. A method according to any one of the preceding Claims, wherein the organic template is a quaternary ammonium salt.

14. A method according to any one of the preceding Claims, wherein in the synthetic gel composition the molar ratio M₂/ₙO : SiO₂ is adjusted in the range of from 0.01 to 0.045, wherein M represents an alkali or alkaline earth metal of the valency n.

15. A method according to any one of the preceding Claims, wherein the molar ratio SiO/Al₂O₃ is adjusted in the range of from 50 to 150.

16. A method according to any one of the preceding Claims, wherein the crystallisation of the synthetic gel is carried out at temperatures of from 120°C to 200°C, in particular 140°C to 180°C.

17. A method according to any one of the preceding Claims, wherein the crystallisation time amounts to approximately 50 to 500 hours, in particular approximately 100 to 250 hours.

18. A method according to any one of the preceding Claims, wherein the quaternary ammonium salt is a tetraethyl ammonium salt.

## Revendications

1. Procédé de fabrication d'un tamis moléculaire, dans lequel:
- on produit un gel de synthèse, contenant, en solution principalement aqueuse :
a) au moins une substance de départ, qui est choisie dans le groupe constitué par une source d'aluminium, une source de silicium, une source de titane, une source de gallium, une source de chrome, une source de bore, une source de fer, une source de germanium, et une source de phosphore;
b) une matrice organique ;
c) le cas échéant, une source d'ions métalliques alcalins et/ou alcalino-terreux M ayant pour valence n ;
- on cristallise le gel de synthèse dans un récipient réactionnel dans des conditions sensiblement isobares ;
- on sépare la matière solide ; et
- le cas échéant, on lave et on sèche la matière solide;
**caractérisé en ce que** le récipient réactionnel comprend au moins :
- un caisson principal résistant à la pression (1) ;
- un caisson de repos (2) lié au caisson principal (1), qui est disposé au-dessus du caisson principal (1), le caisson principal (1) et le caisson de repos (2) étant liés par le biais d'une conduite sensiblement verticale (3), dont la section transversale est choisie pour que le condensé puisse refluer du caisson de repos (2) dans le caisson principal (1) sans bouchage ;
le caisson de repos (2) présentant une soupape de limitation de pression (9), par laquelle les produits gazeux s'échappant du caisson de repos (2) peuvent être évacués vers l'extérieur.

2. Procédé selon la revendication 1, dans lequel la soupape de limitation de pression (9) est conçue sous forme de soupape à ressort.

3. Procédé selon la revendication 1 ou 2, dans lequel le caisson de repos (2) présente un volume, qui correspond à entre 0,5 % et 5 % du volume du caisson principal (1).

4. Procédé selon l'une des revendications précédentes, dans lequel la section transversale de la conduite (3) est inférieure à 10 % de la section transversale du caisson de repos (2).

5. Procédé selon l'une des revendications précédentes, dans lequel le caisson de repos (2) présente un refroidissement de l'air.

6. Procédé selon l'une des revendications précédentes, dans lequel le rapport entre la hauteur et la largeur du caisson de repos (2) est choisi entre 3/1 et 1/5.

7. Procédé selon l'une des revendications précédentes, dans lequel le caisson principal (1) et le caisson de repos (2) présentent une résistance à la pression d'au moins 10 bars.

8. Procédé selon l'une des revendications précédentes, dans lequel la soupape de régulation de pression (9) présente une marge de fluctuation de moins de 2 bars.

9. Procédé selon l'une des revendications précédentes, dans lequel, pendant la conversion, les sous-produits gazeux provenant du caisson réactionnel sont éliminés.

10. Procédé selon l'une des revendications précédentes, dans lequel la conversion est réalisée à une pression de plus de 8 bars, de préférence à une pression située dans la plage de 10 à 13 bars.

11. Procédé selon l'une des revendications précédentes, dans lequel, pour régler la pression, le récipient réactionnel est chauffé.

12. Procédé selon l'une des revendications précédentes, dans lequel le tamis moléculaire est une zéolithe et le gel de synthèse contient comme substance de départ au moins une source d'aluminium et une source de silicium, le rapport molaire H₂O/SiO₂ étant réglé de préférence dans la plage de 5 à 15.

13. Procédé selon l'une des revendications précédentes, dans lequel la matrice organique est un sel d'ammonium quaternaire.

14. Procédé selon l'une des revendications précédentes, dans lequel, dans la composition du gel de synthèse, le rapport molaire M_{2/n}O/SiO₂ est réglé dans la plage de 0,01 à 0,045, où M représente un métal alcalin ou alcalino-terreux de valence n.

15. Procédé selon l'une des revendications précédentes, dans lequel le rapport molaire SiO₂/Al₂O₃ est réglé dans la plage de 50 à 150.

16. Procédé selon l'une des revendications précédentes, dans lequel la cristallisation du gel de synthèse est réalisée à des températures allant de 120°C à 200°C, en particulier de 140°C à 180°C.

17. Procédé selon l'une des revendications précédentes, dans lequel le temps de cristallisation est d'environ 50 à 500 heures, notamment d'environ 100 à 250 heures.

18. Procédé selon l'une des revendications précédentes, dans lequel le sel d'ammonium quaternaire est un sel de tétraéthylammonium.
